(19) **Europäisches Patentamt**

**European Patent Office**

**Office européen des brevets**

(11) Veröffentlichungsnummer: **0 299 154 B1**

(12) **EUROPÄISCHE PATENTSCHRIFT**

(45) Veröffentlichungstag der Patentschrift: **11.03.92**

(51) Int. Cl.⁵: **A61C 13/12**, B23C 5/02

(21) Anmeldenummer: **88106439.8**

(22) Anmeldetag: **22.04.88**

(54) **Fräser und Fräseinrichtung und Verfahren zum Herstellen von Split-cast-Einkerbungen.**

(30) Priorität: **14.07.87 DE 3723234**

(43) Veröffentlichungstag der Anmeldung:
**18.01.89 Patentblatt 89/03**

(45) Bekanntmachung des Hinweises auf die
Patenterteilung:
**11.03.92 Patentblatt 92/11**

(84) Benannte Vertragsstaaten:
**AT CH DE FR GB IT LI SE**

(56) Entgegenhaltungen:
**DE-A- 566 538**
**DE-A- 2 735 283**
**DE-A- 3 026 137**
**US-A- 1 499 818**

(73) Patentinhaber: **Staude, Aribo**
**Falkenstrasse 18**
**W-7053 Kernen(DE)**

(72) Erfinder: **Staude, Aribo**
**Falkenstrasse 18**
**W-7053 Kernen(DE)**

(74) Vertreter: **Hoeger, Stellrecht & Partner**
**Uhlandstrasse 14 c**
**W-7000 Stuttgart 1(DE)**

## Beschreibung

Die Erfindung betrifft einen dentaltechnischen Fräser zum Herstellen von Split-cast-Einkerbungen in Split-cast-Sockeln mit einem Schaft und einem Frästeil, das aus zwei zur Drehachse des Fräsers rotationssymmetrischen, kegeligen Grundkörpern gebildet ist, wobei die Grundkörper mit ihrer jeweils größeren - bei beiden Grundkörpern gleich großen - Grundflächen aneinanderstoßen und wobei die aneinanderstoßenden Mantelflächen der Grundkörper einen einen Kerbwinkel darstellenden Winkel bilden.

Des weiteren betrifft die Erfindung eine Fräseinrichtung zum Herstellen von Split-cast-Einkerbungen in Split-cast-Sockel, wobei ein erfindungsgemäßer dentaltechnischer Fräser verwendet wird.

Außerdem betrifft die Erfindung ein Verfahren zum Herstellen von Split-Cast-Einkerbungen in einem Split-cast-Sockel.

Ein in der Dentaltechnik übliches Verfahren, die sogenannte Split-cast-Methode, dient zur Überprüfung der Modell-Montage in einem Artikulator.

Diese Methode sieht vor, daß ein Sockel in einen Primärsockel und einen Sekundärsockel aufgeteilt wird, wobei der Primärsockel sogenannte Split-cast-Einkerbungen aufweist und mit diesen formschlüssig auf den Split-cast-Einkerbungen entsprechenden Höckern des Sekundärsockels sitzt. Diese Einkerbungen werden üblicherweise mittels eines Gipsmesmers oder eines Sockelformers angebracht oder auch mit einer aus der DE-OS 30 26 137 bekannten Fräsvorrichtung.

Da aber in der Praxis oftmals die Höhe des Primärsockels durch Beschleifen auf seiner Unterseite verändert werden muß, werden vielfach auch die Split-cast-Einkerbungen herausgeschliffen, so daß diese nachträglich wieder an der Unterseite des Primärsockels angebracht werden müssen.

Des weiteren müssen vielfach bei der Herstellung von Primärsockeln oder Modellen mit Dowel-Pins die Split-cast-Einkerbungen verlegt werden, da sie ansonsten mit den ebenfalls bis nahe an die Unterseite der Modelle reichenden Dowel-Pins kollidieren würden.

Dieses nachträgliche Anbringen von Split-cast-Einkerbungen an der Unterseite des Modells war bisher mit großen Schwierigkeiten verbunden, da kein hierfür geeignetes Werkzeug zur Verfügung stand und man sich mit für diese Aufgabe nicht geeigneten Fräsern behelfen mußte.

Die aus der DE-OS 30 26 137 bekannte Fräsvorrichtung ist zum einen relativ teuer und benötigt eine besondere Aufstellfläche, weshalb in Dentallabors nicht jeder Arbeitsplatz mit dieser Vorrichtung ausgestattet werden kann.

Diese Fräsvorrichtung weist zum anderen auch noch den Nachteil auf, daß bis zum Sockelboden reichende Dowel-Pins beim Einbringen der Einkerbungen nicht für die Bedienungsperson sichtbar sind, so daß diese, für die weitere Bearbeitung des Modells essentiellen Pins oftmals abgefräst werden.

Der Erfindung lag daher die Aufgabe zugrunde, einen dentaltechnischen Fräser zur Herstellung von Split-cast-Einkerbungen zu schaffen, der das Herstellen dieser Einkerbungen in einfacher und für die Bedienungsperson ergonomisch günstiger Weise zuläßt.

Diese Aufgabe wird bei einem Fräser der eingangs beschriebenen Art erfindungsgemäß dadurch gelöst, daß das Frästeil ein Fräserkopf ist und daß die Winkelhalbierende des Kerbwinkels mit dem dem Schaft abgewandten Teil der Drehachse einen Winkel von ungefähr 60° bis ungefähr 80° einschließt.

Der erfindungsgemäße Fräser hat den Vorteil, daß er zum einen hinsichtlich der Ausbildung des Fräserkopfs so gebaut ist, daß die Split-cast-Einkerbungen mit einer einzigen linearen Bewegung des Fräsers erreicht werden können und daß außerdem die Bedienungsperson diesen Fräser in für sie günstiger Weise halten kann. Die Notwendigkeit für letzteres ist darin begründet, daß der Fräser in der Regel in einem Ansatzstück einer biegsamen Welle aufgenommen ist, welche von einem Handstück umgeben ist, das die jeweilige Bedienungsperson führt. Damit wird der Fräser stets einen Neigungswinkel zu einer durch die Unterseite eines Modells definierten Ebene aufweisen. Der erfindungsgemäße Fräser ist nun durch den Winkel zwischen der Winkelhalbierenden des Kerbwinkels und der Drehachse von ungefähr 60° bis ungefähr 80° so ausgebildet, daß er trotz dieser Neigung zur Unterseite des Modells zu ihrer Längsrichtung symmetrische Einkerbungen durch eine einzige lineare Bewegung des Fräserkopfes fräst, da die Mantelflächen eine unterschiedliche Neigung zur Drehachse haben.

Somit läßt der erfindungsgemäße Fräser ein einfaches, schnelles und gleichmäßiges Herstellen von Split-cast-Einkerbungen zu.

Der Einsatz des Fräsers in einem Handstück läßt bei der Bearbeitung des Sockelbodens stets den Blick der Bedienungsperson auf den jeweils zu bearbeitenden Bereich frei, so daß ein Abfräsen des Dowel-Pins vermieden werden kann.

Eine Handbedienung läßt außerdem schneller erkennen, wenn das Fräswerkzeug abgenutzt ist und ausgetauscht werden muß.

Besonders wichtig ist das symmetrische Einbringen der Kerben in den Sockelboden, um einen guten Formschluß mit den komplementären Erhebungen des Sekundärsockels zu erreichen, was eine exakte Positionierung im Artikulator gewährleistet.

Eine bevorzugte Ausführungsform des erfindungsgemäßen Fräsers sieht vor, daß der Fräserkopf die Form zweier mit ihrer Grundfläche aufeinander sitzender Kegelstümpfe hat, so daß insbesondere auch eine Vorderseite des Fräsers stumpf abgeschlossen ist.

Weiterhin ist es günstig, wenn der dem Schaft zugewandte Kegelstumpf eine zur Grundfläche des Kegelstumpfs parallele Fläche aufweist, die mit einer Querschnittsfläche des an diese angesetzten Schaftes identisch ist. In diesem Fall wird erreicht, daß ein ansatzloser Übergang von dem Schaft zum diesem zugewandten Kegelstumpf stattfindet und damit die Gefahr von Ansätzen und Kanten, die zur Verletzung führen könnten, vermieden wird.

Eine vorteilhafte Ausbildung der fräsenden Mantelflächen sieht vor, daß diese schräg zur Umfangsrichtung des Fräsers verlaufende Reihen von Schneidkörpern aufweisen, wobei es noch vorteilhafter ist, wenn die Schneidkörper durch Querhiebe voneinander getrennte Zähne sind.

Eine sehr einfache und vor allem kostengünstige Herstellung des erfindungsgemäßen Fräsers ist dann möglich, wenn der Fräserkopf einstückig an den Schaft angeformt ist.

Bei den bisher beschriebenen Ausführungsbeispielen des erfindungsgemäßen Fräsers wurde nicht festgelegt, wie groß der Kerbwinkel ungefähr sein soll, vorteilhaft sind jedoch alle Kerbwinkel zwischen ungefähr 30 und 150°.

Noch günstiger ist es jedoch, wenn der Kerbwinkel zwischen ungefähr 60 und 120° liegt. Die vorteilhafteste Ausführungsform sieht vor, daß der Kerbwinkel ungefähr 90° beträgt.

In Anpassung an ergonomische Bedingungen ist es besonders vorteilhaft, wenn die Winkelhalbierende mit der Drehachse einen Winkel in dem bevorzugten Bereich von 70 bis 80° einschließt.

Ein besonders bevorzugtes Ausführungsbeispiel sieht vor, daß die Winkelhalbierende einen Winkel von ungefähr 75° mit der Drehachse einschließt.

Ferner liegt der Erfindung die Aufgabe zugrunde, eine Fräseinrichtung zum Herstellen von Split-cast-Einkerbungen in Split-cast-Sockel zu schaffen, mit welcher sich diese Einkerbungen in einfacher und sicherer Weise herstellen lassen.

Diese Aufgabe wird mit einer Fräseinrichtung gemäß Anspruch 7 gelöst.

Eine derartige Fräseinrichtung hat den großen Vorteil, daß sich mit dieser zuverlässig und sicher die Split-cast-Einkerbungen aus dem Primärsockel oder Modell herausfräsen lassen.

Eine besonders vorteilhafte Abstützung des Primärsockels beim Fräsen von Split-cast-Einkerbungen ist dann möglich, wenn die Auflagefläche sich seitlich des Fräskopfs und parallel zu dessen Umfangsrichtung erstreckt.

Ein Kippen beim Einfräsen der Split-cast-Einkerbungen wird zweckmäßigerweise dadurch vermieden, daß sich die Auflagefläche auf gegenüberliegenden Seiten des Fräskopfs erstreckt, so daß der Primärsockel durch die beiden einander gegenüberliegenden Auflageflächen, zwischen denen der Fräskopf hervorsteht, gesichert ist.

Bei den vorstehend beschriebenen Ausführungsbeispielen kann die Auflagefläche grundsätzlich bliebig ausgebildet sein. So kann die Auflagefläche nicht nur eben, sondern beispielsweise auch gewölbt sein, um durch eine Kippschwenkbewegung des Primärsockels auf der gewölbten Auflauffläche ein Einfräsen der Split-cast-Einkerbung zu ermöglichen.

Die Auflagefläche kann aber auch eben sein, so daß der Primärsockel auf dieser Fläche beim Einfräsen der Split-cast-Einkerbungen entlanggeschoben werden kann. Solange sich die ebene Fläche quer zu der Drehrichtung des Fräsers erstreckt, aus welcher der Fräserkopf hervorsteht, ist eine zu einer Innenseite des Primärsockels hin auslaufende Split-cast-Einkerbung lediglich mit Schwierigkeiten einfräsbar und vor allem von der Geschicklichkeit der Bedienungsperson abhängig. Aus diesem Grund ist es vorteilhaft, wenn die Auflagefläche und der Fräserkopf relativ zueinander verstellbar sind, so daß der Fräserkopf von einer Frässtellung in eine nicht über die von der Auflagefläche definierte Ebene überstehende Freilaufstellung überführbar ist. Mit dieser Vorrichtung besteht die Möglichkeit, durch Verstellen der Auflagefläche und des Fräskopfs relativ zueinander eine auslaufende Split-cast-Einkerbung zu fräsen.

Hierbei hat es sich als vorteilhaft erwiesen, wenn die Auflagefläche im wesentlichen quer zu einer Drehachse des Fräsers verschiebbar ist, so daß der Primärsockel vollflächig auf der Auflagefläche liegen bleiben kann und mitsamt der Auflagefläche relativ zum Fräserkopf bewegbar ist.

Ein besonders bevorzugtes Ausführungsbeispiel der vorstehend beschriebenen Ausführungsform einer erfindungsgemäßen Fräseinrichtung sieht vor, daß der Fräserkopf beim Verschieben der Auflagefläche von der Frässtellung in die Freilaufstellung überführbar ist, d. h. daß eine Kopplung der Verschiebebewegung der Auflagefläche mit einer Verstellung der Auflagefläche relativ zum Fräserkopf hergestellt ist, so daß automatisch durch dieses Verschieben der Auflagefläche sich auch die Lage des Fräserkopfs relativ zu der Auflagefläche verändert.

Bei einer besonders einfachen Ausführungsform der erfindungsgemäßen Fräseinrichtung ist dies dadurch gelöst, daß die Auflagefläche zu einer Verschieberichtung geneigt ist, so daß bei einer Verschiebung der Auflagefläche quer zur Drehachse des Fräsers der Fräserkopf zwangsläufig verschieden tief in den auf der Auflagefläche fest aufliegenden Primärsockel einfräst.

Alternativ zur vorstehend beschriebenen Ausführungsform kann aber auch vorgesehen sein, daß die Auflagefläche durch Getriebemittel quer zur Verschieberichtung verstellbar ist, das heißt also, daß beim Verschieben der Auflagefläche in Verschieberichtung gleichzeitig noch eine Querbewegung zu dieser Verschieberichtung einsetzt und damit ebenfalls bei feststehendem Fräserkopf dieser von einer Frässtellung in eine Freilaufstellung oder umgekehrt überführbar ist.

Schließlich liegt der Erfindung die Aufgabe zugrunde, ein gattungsgemäßes Verfahren zum Herstellen von Split-cast-Einkerbungen möglichst einfach und rationell zu gestalten.

Diese Aufgabe wird bei einem Verfahren der eingangs beschriebenen Art erfindungsgemäß dadurch gelöst, daß ein Fräser oder eine Fräseinrichtung mit den vorstehend beschriebenen Merkmalen Verwendung findet.

Dieses Verfahren hat dann den Vorteil, daß die Split-cast-Einkerbungen durch eine lineare Bewegung des Fräsers in einfacher, rationeller und vor allem stets gleichmäßiger Weise in die Unterseite eines Modells eingearbeitet werden können.

Weitere Merkmale und Vorteile sind Gegenstand der nachfolgenden zeichnerischen Darstellung sowie der Beschreibung eines Ausführungsbeispiels. In der Zeichnung zeigen:

Fig. 1      einen Schnitt durch ein Ausführungsbeispiel des erfindungsgemäßen Fräsers und

Fig. 2      eine Darstellung des Einsatzes des erfindungsgemäßen Fräsers beim Herstellen von Split-cast-Einkerbungen.

Fig. 3      eine teilweise geschnittene Seitenansicht eines ersten Ausführungsbeispiels einer erfindungsgemäßen Fräseinrichtung;

Fig. 4      eine Stirnansicht eines zweiten Ausführungsbeispiels der Fräseinrichtung und

Fig. 5      eine Draufsicht in Richtung des Pfeils A in Fig. 4.

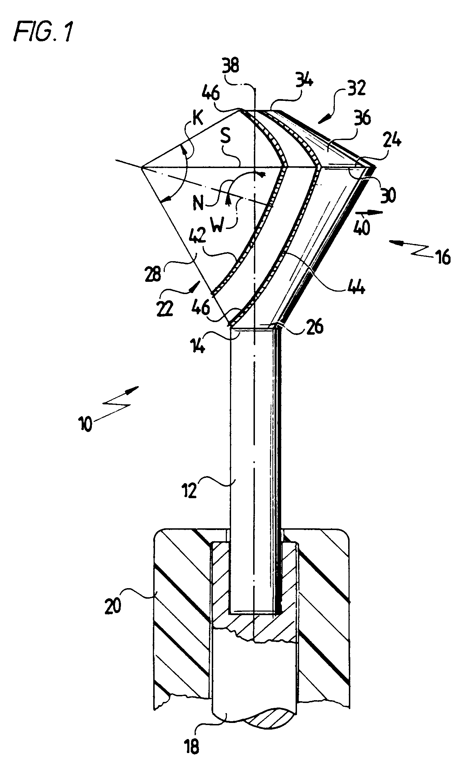

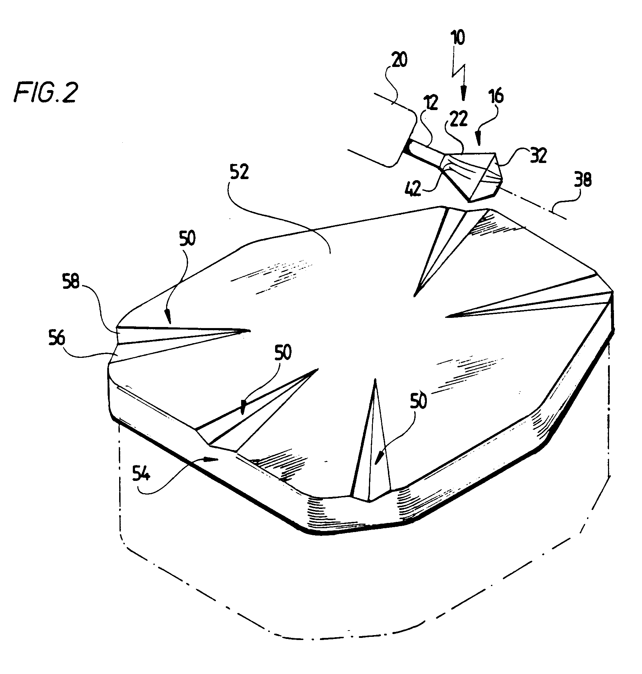

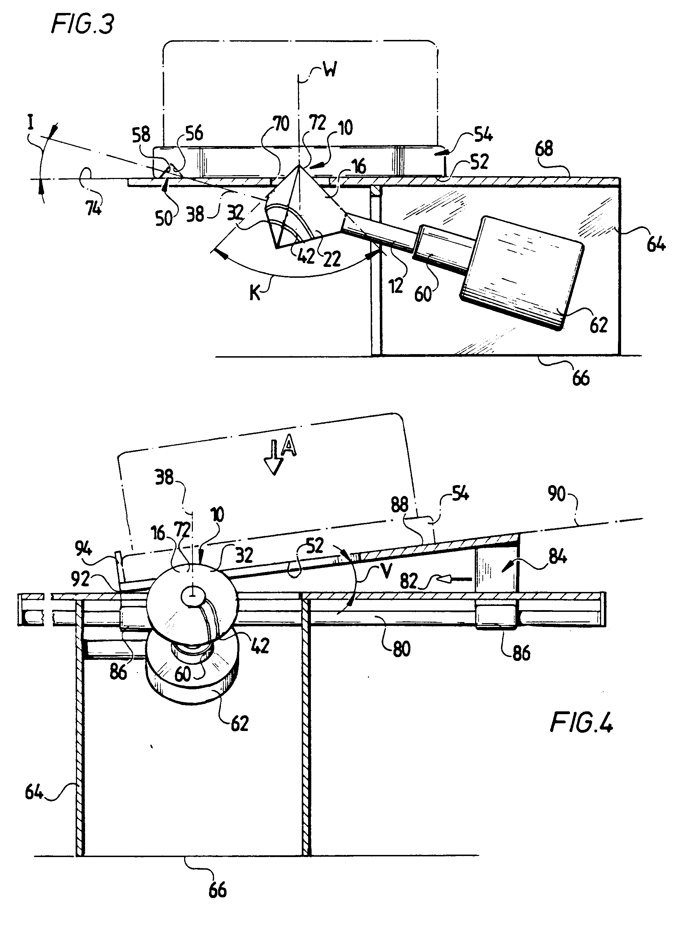

Fig. 1 zeigt ein Ausführungsbeispiel eines als Ganzes mit 10 bzeichneten erfindungsgemäßen Fräsers mit einem Schaft 12 und einem an ein vorderes Ende 14 des Schaftes 12 angesetzten als Ganzes mit 16 bezeichneten Fräserkopf. Dieser Fräser 10 steckt mit dem Schaft 12 in einer Aufnahme 18 einer flexiblen Welle, wobei die Aufnahme 18 in der Regel von einem Handstück 20 zum Führen der flexiblen Welle mit dem Fräser 10 drehbar gelagert ist.

Der Fräskopf 16 umfaßt einen ersten Kegelstumpf 22, welcher umgekehrt an das vordere Ende 14 des Schaftes 12 angesetzt ist, so daß eine Grundfläche 24 des ersten Kegelstumpfs von dem vorderen Ende 14 abgewandt ist und eine zur Grundfläche parallele Schnittfläche 26 sich an das vordere Ende 14 des Schaftes 12 anschließt, wobei eine Querschnittsfläche des Schaftes 12 im Bereich des vorderen Endes 14 identisch mit der Schnittfläche 26 ist, so daß der Schaft 12 ansatzlos in eine erste Mantelfläche 28 des ersten Kegelstumpfs 22 übergeht.

Auf der Grundfläche 24 des ersten Kegelstumpfes 22 sitzt mit seiner Grundfläche 30 ein zweiter Kegelstumpf 32, wobei die Grundfläche 30 des zweiten Kegelstumpfs 32 mit der Grundfläche 24 des ersten Kegelstumpfs 22 identisch ist.

Dieser zweite Kegelstumpf 32 besitzt ebenfalls eine zu seiner Grundfläche 30 parallele Schnittfläche 34, welche ein vorderes Ende des Fräserkopfs 16 bildet. Zwischen dieser Schnittfläche 34 und der Grundfläche 30 erstreckt sich eine zweite Mantelfläche 36 des zweiten Kegelstumpfes 32.

Sowohl der erste Kegelstumpf 22 als auch der zweite Kegelstumpf 32 sind rotationssymmetrisch zu einer Drehachse 38 des Schaftes 12 angeordnet, so daß die Drehachse 38 die Schnittfläche 34, die Grundflächen 24 und 30 sowie die Schnittfläche 26 jeweils in ihrem Zentrum durchsetzt.

Die erste Mantelfläche 28 und die zweite Mantelfläche 36 schneiden sich längs einer Kreislinie S, welche eine äußere Begrenzung der Grundflächen 24 und 30 bildet und schließen dabei einen Kerbwinkel K von 90° ein. Eine Winkelhalbierende W des Kerbwinkels K verläuft in radialer Richtung zur Drehachse 38 und gegenüber dieser um einen Neigungswinkel N geneigt, wobei dieser Neigungswinkel in dem dargestellten Ausführungsbeispiel 75° beträgt. Die erste Mantelfläche 28 und die zweite Mantelfläche 36 bewegen sich beim Antrieb des Schaftes 12 im Uhrzeigersinn in der durch den Pfeil 40 gekennzeichneten Drehrichtung und stellen die beim Fräsen zum Einsatz kommenden Arbeitsflächen dar.

Hierzu sind die erste und zweite Mantelfläche 28, 36 mit schräg zur Drehrichtung 40 auf diesen Mantelflächen 28, 36 angeordneten Zahnreihen 42 besetzt, welche durch Querhiebe 44 in einzelne Zähne 46 unterteilt sind.

Bei dem Fräser 10 gemäß dem dargestellten Ausführungsbeispiel hat der Fräserkopf 16 von der Schnittfläche 26 bis zur Schnittfläche 34 eine Länge von ungefähr 10 mm und im Bereich der Grundflächen 24 und 30 einen Durchmesser von ungefähr 12 mm.

Fig. 2 zeigt den Einsatz des erfindungsgemäßen Fräsers 10 beim Herstellen von Split-cast-Einkerbungen 50 auf einer Unterseite 52 eines Primärsockels oder Modells 54.

Hierzu wird der erfindungsgemäße Fräser 10 so gehalten, daß seine Drehachse 38 mit der durch die Unterseite 52 des Primärsockels gebildeten Ebenen einen Winkel von ungefähr 15° einschließt. In diesem Fall arbeiten die beiden Mantelflächen 28 und 36 so, daß die Einkerbung 50 einen Kerbwinkel von ungefähr 90° aufweist und im wesentlichen zwei identische Kerbflächen 56 und 58 entstehen läßt.

Damit kann durch eine einzige Bewegung des erfindungsgemäßen Fräsers 10 von einem Außenrand der Unterseite 52 nach innen oder von innen nach außen eine Split-cast-Kerbe hergestellt werden, wie sie für die Dentaltechnik benötigt wird.

Ein Ausführungsbeispiel einer erfindungsgemäßen Fräseinrichtung, dargestellt in Figur 3 zeigt im einzelnen den erfindungsgemäßen Fräser 10, welcher in einer Antriebswelle 60 eines stationären Antriebsmotors 62 gehalten ist. Dieser Antriebsmotor 62 ist in einem Gestell 64 gehalten, welches mit seiner Unterseite 66 auf einem Tisch oder dergleichen ruht und auf seiner Oberseite eine Auflagefläche 68 trägt. Die Auflagefläche 68 ist mit einer Ausnehmung 70 versehen, durch welche der Fräser 10 mit seiner Arbeitsfläche 72 hindurchgreift.

Die Arbeitsfläche 72 ist, wie bereits beschrieben, so ausgebildet, daß der Fräserkopf 16 zwei in einem Kerbwinkel K aufeinanderstehende Kerbflächen 56 und 58 fräst.

Die Auflageebene 74, auf welcher der Primärsockel oder das Modell 54 mit ihrer Unterseite 52 auflegbar sind, ist relativ zu dem Fräserkopf 16 so ausgerichtet, daß die Winkelhalbierende W des Kerbwinkels K im wesentlichen senkrecht auf der Auflageebene 74 steht, so daß der Fräserkopf 16 mit seiner Arbeitsfläche 72 eine symmetrische Split-cast-Einkerbung 50 aus der Unterseite 52 des Primärsockels oder Modells 54 herausfräst.

Dies hat zwangsläufig zur Folge, daß die Drehachse 38 des Fräsers 10 in einem Winkel I zu der Auflageebene 74 verläuft. Dieser Winkel I hängt mit dem Winkel N des Fräsers 10 dergestalt zusammen, daß der Winkel I 90° minus dem Winkel N des Fräsers 10 entspricht.

Eine verbesserte Ausführungsform der erfindungsgemäßen Fräseinrichtung ist hinsichtlich der Halterung des Fräsers 10 in der Antriebswelle 60 des Antriebsmotors 62 identisch ausgebildet und daher mit denselben Bezugszeichen versehen. Der Antriebsmotor 62 ist außerdem in dem Gestell 64 gehalten.

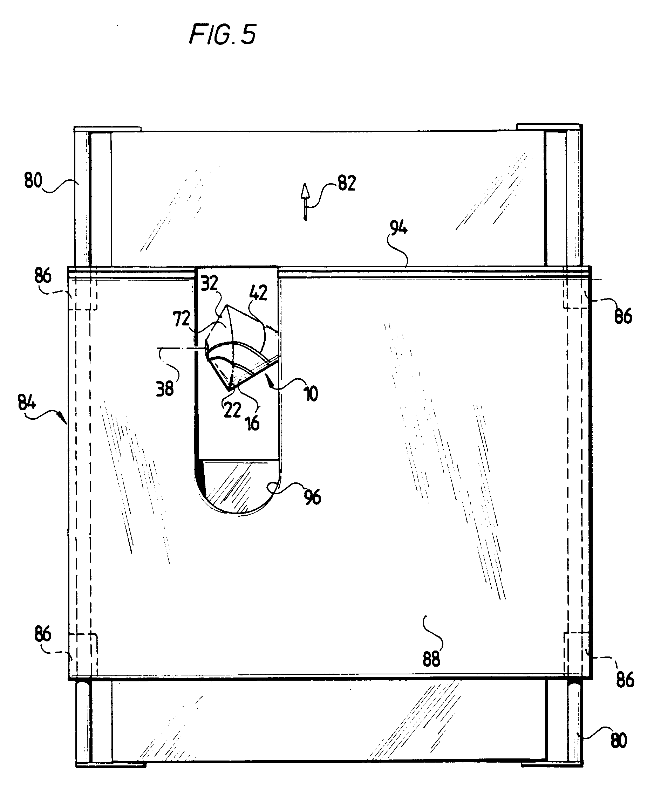

Im Gegensatz zum ersten Ausführungsbeispiel der erfindungsgemäßen Fräseinrichtung (Figur 3) zeigt das zweite Ausführungsbeispiel der erfindungsgemäßen Fräseinrichtung (Figur 4) eine Führungsbahn 80, welche im wesentlich senkrecht zu der Drehachse 38 des Fräsers 10 sowie senkrecht zu der Winkelhalbierenden W der fräsenden Arbeitsfläche 72 ausgerichtet ist. Dadurch wird durch die Führungsbahn 80 eine Verschieberichtung 82 festgelegt, in welcher ein Schlitten 84 auf der Führungsbahn 80 verschieblich ist. So ist der Schlitten vorzugsweise mit Führungskörpern 86 versehen, welche auf der Führungsbahn 80 gleiten. Der Schlitten 84 selbst hat eine ungefähr keilförmige Gestalt und weist eine Auflagefläche 88 auf, durch welche eine Auflageebene 90 festgelegt ist, die ihrerseits um einen Winkel V gegenüber der Verschieberichtung 82 geneigt ist. Somit ist ein auf dieser mit seiner Unterseite 52 aufliegender Primärsockel 54 gegenüber der Verschieberichtung 82 geneigt.

Bei einer bevorzugten Ausführungsform ist die Auflagefläche 88 auf ihrer der Führungsbahn 80 zugewandten Vorderkante 92 noch zusätzlich mit einem Anschlag 94 versehen, welcher eine Fixierung des Primärsockels 54 auf der Auflagefläche 88 erlaubt.

Des weiteren ist die Auflagefläche 88 ebenfalls mit einer Aussparung 96 versehen, in welche der Fräserkopf 16 mit seiner Arbeitsfläche 72 - wie in Figur 5 dargestellt - teilweise hineinragt. Diese Aussparung 96 ist so geformt, daß der Schlitten 84 mit der Auflagefläche 88 berührungsfrei in Verschieberichtung 82 und entgegengesetzt zu dieser über dem Fräserkopf 16 hin und her bewegt werden kann, wobei die Arbeitsfläche 72 des Fräserkopfs 16 durch die vorzugsweise U-förmige Aussparung 96 in Verschieberichtung 82 und entgegengesetzt dazu hindurchläuft.

Dadurch besteht die Möglichkeit, in die Unterseite 52 des Primärsockels 54 Split-cast-Einkerbungen 50 einzufräsen, welche zu einer Mitte der Unterseite 52 des Primärsockels 54 hin auslaufen, da der Fräserkopf 16 mit seiner Arbeitsfläche 72 beginnend an einem Außenrand des Primärsockels 54 in diesen hineinfräst und beim Verschieben des Schlittens 84 in Verschieberichtung 72 aufgrund der Schrägstellung der Unterseite 52 gegenüber der Verschieberichtung 82 schräg durch den Primärsockel hindurchfräst und aus der Unterseite 52 an einer Stelle austritt, welche durch die Schrägstellung der Auflageebene 90 in Richtung der Winkelhalbierenden W einen Abstand von der Drehachse 38 des Fräsers 10 hat, welcher einer maximalen Erstreckung der Arbeitsfläche 72 in Richtung der Winkelhalbierenden W entspricht.

Wie weit die Split-cast-Einkerbungen 50 in das Innere der Unterseite 52 des Primärsockels 54 hineinreichen sollen hängt davon ab, wie groß der Winkel V gewählt wird.

**Patentansprüche**

1. Dentaltechnischer Fräser zum Herstellen von Split-cast-Einkerbungen in Split-cast-Sockeln mit einem Schaft und einen Frästeil, das aus zwei zur Drehachse des Fräsers rotationssymmetrischen, kegeligen Grundkörpern gebildet ist, wobei die Grundkörper mit ihrer jeweils größeren - bei beiden Grundkörpern gleich großen - Grundflächen aneinanderstoßen und wobei die aneinanderstoßenden Mantelflächen der Grundkörper einen einen Kerbwinkel darstellenden Winkel bilden, **dadurch gekennzeichnet,** daß das Frästeil ein Fräserkopf (16) ist und daß die Winkelhalbierende (W) des Kerbwinkels (K) mit dem dem Schaft abgewandten Teil der Drehachse (38) einen Winkel (N) von ungefähr 60° bis ungefähr 80° einschließt.

2. Fräser nach Anspruch 1, **dadurch gekennzeichnet,** daß die Mantelflächen (28, 36) auf diesen schräg zur Umfangsrichtung (40) des Fräsers (10) verlaufende Reihen (42) von Schneidkörpern aufweisen.

3. Fräser nach Anspruch 2, **dadurch gekennzeichnet,** daß die Schneidkörper durch Querhiebe (44) voneinander getrennte Zähne (46) sind.

4. Fräser nach einem der voranstehenden Ansprüche, **dadurch gekennzeichnet,** daß der Kerbwinkel (K) zwischen ungefähr 60 und 120° liegt.

5. Fräser nach Anspruch 4, **dadurch gekennzeichnet,** daß der Kerbwinkel (K) ungefähr 90° beträgt.

6. Fräser nach einem der voranstehenden Ansprüche, **dadurch gekennzeichnet,** daß die Winkelhalbierende (W) einen Winkel von ungefähr 70 bis 80° mit der Drehachse (38) einschließt.

7. Fräseinrichtung zum Herstellen von Split-cast-Einkerbungen in Split-cast-Sockel, **dadurch gekennzeichnet,** daß die Fräseinrichtung eine Antriebseinheit (62) aufweist, in welcher ein Fräser mit einem Fräserkopf (16) nach einem der Ansprüche 1 bis 6 einseitig gehalten ist, daß die Fräseinrichtung eine auf einer Seite neben dem Fräskopf (16) angeordnete Auflagefläche (68, 88) für einen Split-cast-Sockel (54) umfaßt, daß der Fräserkopf (16) in Frässtellung aus einer durch die Auflagefläche (68, 88) festgelegten Auflageebene (74, 90) hervorsteht, und daß die Winkelhalbierende (W) des Kerbwinkels (K) des Fräserkopfs (16) im wesentlichen senkrecht auf der Auflageebene (74, 90) steht.

8. Fräseinrichtung nach Anspruch 7, **dadurch gekennzeichnet,** daß die Auflagefläche (68, 88) sich auf einer Seite neben dem Fräserkopf (16) und parallel zu seiner Umfangsrichtung erstreckt.

9. Fräseinrichtung nach Anspruch 8, **dadurch gekennzeichnet,** daß sich die Auflagefläche (68, 88) auf einander gegenüberliegenden Seiten des Fräserkopfs (16) neben diesem erstreckt.

10. Fräseinrichtung nach einem der Ansprüche 7 bis 9, **dadurch gekennzeichnet,** daß die Auflagefläche (88) und der Fräserkopf (16) relativ zueinander verstellbar sind, so daß der Fräserkopf (16) von der Frässtellung in eine nicht über die von der Auflagefläche definierte Auflageebene (90) überstehende Freilaufstellung überführbar ist.

11. Fräseinrichtung nach Anspruch 10, **dadurch gekennzeichnet,** daß die Auflagefläche (88) im wesentlichen quer zur Drehachse (38) des Fräsers (10) verschiebbar ist.

12. Fräseinrichtung nach Anspruch 11, **dadurch gekennzeichnet,** daß der Fräserkopf (16) beim Verschieben der Auflagefläche (88) von der Frässtellung in die Freilaufstellung überführbar ist.

13. Verfahren zum Herstellen von Split-cast-Einkerbungen in Split-cast-Sockel, **dadurch gekennzeichnet,** daß ein Fräser oder eine Fräseinrichtung gemäß einem der voranstehenden Ansprüche Verwendung findet.

**Claims**

1. Dental milling cutter for producing split-cast notches in split-cast bases comprising a shank and a milling member formed from two conical base members rotationally symmetrical to the axis of rotation of the milling cutter, the base members abutting on one another with their respective larger base surfaces, these surfaces being of equal size for both base members, and the touching outer surfaces of the base members forming an angle representing a notch angle, characterized in that the milling member is a milling head (16) and that the angle bisector (W) of the notch angle (K) forms an angle (N) of approximately 60° to approximately 80° with the portion of the axis of rotation (38) remote from the shank.

2. Milling cutter as defined in claim 1, characterized in that the outer surfaces (28, 36) have rows (42) of cutting members extending thereon at an angle to the circumferential direction (40) of the milling cutter (10).

3. Milling cutter as defined in claim 2, characterized in that the cutting members are teeth (46) separated from one another by transverse cuts (44).

4. Milling cutter as defined in any of the preceding claims, characterized in that the notch angle (K) is between approximately 60 and 120°.

5. Milling cutter as defined in claim 4, characterized in that the notch angle (K) is approximately 90°.

6. Milling cutter as defined in any of the preceding claims, characterized in that the angle bisector (W) forms an angle of approximately 70 to 80° with the axis of rotation (38).

7. Milling device for producing split-cast notches in split-cast bases, characterized in that the milling device has a drive unit (62), a milling cutter with a milling head (16) as defined in any of claims 1 to 6 being held on one side therein, that the milling device comprises a support surface (68, 88) for a split-cast base (54), said surface being arranged on one side adjacent the milling head (16), that the milling head (16) protrudes in its milling position out of a plane of support (74, 90) determined by the support surface (68, 88), and that the angle bisector (W) of the notch angle (K) of the milling head (16) extends essentially at right angles to the plane of support (74, 90).

8. Milling device as defined in claim 7, characterized in that the support surface (68, 88) extends on one side adjacent the milling head (16) and parallel to its circumferential direction.

9. Milling device as defined in claim 8, characterized in that the support surface (68, 88) extends on opposite sides of the milling head (16) adjacent thereto.

10. Milling device as defined in any of claims 7 to 9, characterized in that the support surface (88) and the milling head (16) are adjustable relative to one another such that the milling head (16) is transferrable from the milling position into a free-wheeling position not protruding beyond the plane of support (90) defined by the support surface.

11. Milling device as defined in claim 10, characterized in that the support surface (88) is essentially displaceable transversely to the axis of rotation (38) of the milling cutter (10).

12. Milling device as defined in claim 11, characterized in that the milling head (16) is transferrable from the milling position into the freewheeling position during displacement of the support surface (88).

13. Method for producing split-cast notches in split-cast bases, characterized in that a milling cutter or a milling device according to any of the preceding claims is used.

**Revendications**

1. Fraise de technique dentaire pour la réalisation d'entailles de type split-cast dans des socles de type split-cast, comprenant une tige et une partie de fraise qui est formée par deux corps de base coniques symétriques en rotation par rapport à l'axe de rotation de la fraise, les corps de base étant mis réciproquement bout à bout par leurs plus grandes faces de base respectives qui sont de même grandeur pour les deux corps de base, les surfaces d'enveloppe des corps de base mises réciproquement bout à bout formant un angle représentant un angle d'entaille, caractérisée en ce que la partie de fraise est une tête de fraise (16) et en ce que la biszectrice (W) de l'angle d'entaille (K) forme avec la partie de l'axe de rotation (38) tournée à l'écart de la tige un angle (N) compris entre approximativement 60° et approximativement 80°.

2. Fraise suivant la revendication 1, caractérisée en ce que les surfaces d'enveloppe (28, 36) présentent, s'étendant sur ces surfaces en oblique par rapport à la direction périphérique (40) de la fraise (10), des rangées (42) d'éléments de coupe.

3. Fraise suivant la revendication 2, caractérisée en ce que les éléments de coupe sont des dents (46) séparées l'une de l'autre par des évidements transversaux (44).

4. Fraise suivant l'une quelconque des revendications précédentes, caractérisée en ce que l'angle d'entaille (K) est compris entre approximativement 60° et 120°.

5. Fraise suivant la revendication 4, caractérisée en ce que l'angle d'entaille est d'approximativement 90°.

6. Fraise suivant l'une quelconque des revendications précédentes, caractérisée en ce que la bissectrice (W) forme avec l'axe de rotation (38) un angle d'approximativement 70 à 80°.

7. Dispositif de fraisage pour la réalisation d'entailles de type split-cast dans un socle de type split-cast, caractérisé en ce que le dispositif de fraisage présente un ensemble d'entraînement (62) dans lequel est maintenue d'un côté une fraise avec une tête de fraise (16) suivant l'une quelconque des revendications 1 à 6, en ce que le dispositif de fraisage comporte une surface d'appui (68, 88), agencée sur une face près de la tête de fraise (16), pour un socle de type split-cast (54), en ce que la tête de fraise (16) fait saillie en position de fraisage hors d'un plan d'appui (74, 90) déterminé par la surface d'appui (68, 88) et en ce que la bissectrice (W) de l'angle d'entaille (K) de la tête de fraise (16) est sensiblement perpendiculaire au plan d'appui (74, 90).

8. Dispositif de fraisage suivant la revendication 7, caractérisé en ce que la surface d'appui (68, 88) s'étend sur un côté près de la tête de fraise (16) et parallèlement à sa direction périphérique.

9. Dispositif de fraisage suivant la revendication 8, caractérisé en ce que la surface d'appui (68, 88) s'étend près de la tête de fraise (16) sur des côtés de celle-ci qui sont opposés l'un à l'autre.

10. Dispositif de fraisage suivant l'une quelconque des revendications 7 à 9, caractérisé en ce que la surface d'appui (88) et la tête de fraise (16) sont réglables l'une par rapport à l'autre de sorte que la tête de fraise (16) peut être transférée de la position de fraisage à une position de marche à vide qui ne dépasse pas au-delà du plan (90) d'appui déterminé par la surface d'appui.

11. Dispositif de fraisage suivant la revendication 10, caractérisé en ce que la surface d'appui (88) peut être déplacée sensiblement transversalement à l'axe de rotation (38) de la fraise (10).

12. Dispositif de fraisage suivant la revendication 11, caractérisé en ce que la tête de fraise (16) peut être transférée, lors du déplacement de la surface d'appui (88), de la position de fraisage à la position de marche à vide.

13. Procédé de réalisation d'entailles de type split-cast dans un socle de type split-cast, caractérisé en ce qu'une fraise ou un dispositif de fraisage suivant l'une quelconque des revendications précédentes est utilisé.

FIG. 1

FIG.2

FIG.3

FIG.4

## FIG. 5